Europäisches Patentamt

European Patent Office

Office européen des brevets

(11) Numéro de publication: **0 294 254**
**A1**

## (12) DEMANDE DE BREVET EUROPEEN

(21) Numéro de dépôt: 88401096.8

(22) Date de dépôt: 05.05.88

(51) Int. Cl.⁴: **E 05 F 11/38**
**B 60 J 1/17**

(30) Priorité: 07.05.87 FR 8706471

(43) Date de publication de la demande:
07.12.88 Bulletin 88/49

(84) Etats contractants désignés:
BE DE ES FR GB IT NL SE

(71) Demandeur: **SAINT-GOBAIN VITRAGE**
**Les Miroirs 18, avenue d'Alsace**
**F-92400 Courbevoie (FR)**

(72) Inventeur: **Roze, Jean-Pierre**
**2 Bis Avenue de la Libération**
**F-60200 Compiegne (FR)**

(74) Mandataire: **Muller, René et al**
**SAINT-GOBAIN RECHERCHE 39, quai Lucien Lefranc**
**F-93304 Aubervilliers (FR)**

(54) Vitrage mobile notamment pour véhicule automobile.

(57) L'invention concerne un vitrage mobile, notamment un vitrage coulissant dans la carrosserie d'un véhicule de transport.

Le vitrage selon l'invention comprend un vitrage monolithique ou feuilleté (12) muni sur au moins une partie de sa périphérie, d'un profil surmoulé (13) obtenu par encapsulation du vitrage présentant une structure permettant un assemblage aisé et permanent par emboitement et/ou pincement avec une pièce de liaison (15) solidaire du mécanisme assurant la mobilité du vitrage.

FIG.3

## Description

### VITRAGE MOBILE NOTAMMENT POUR VEHICULE AUTOMOBILE

L'invention concerne un vitrage mobile, en particulier un vitrage latéral d'un véhicule de transport, pouvant être mobile notamment par coulissement dans un mouvement de montée-baisse.

Les vitrages latéraux des véhicules de transport, en particulier d'une automobile, sont généralement montés mobiles par coulissement dans la carrosserie, généralement les portières du véhicule. Ce montage mobile nécessite l'association ou liaison du vitrage avec un système mécanique de montée-baisse.

Pour faciliter cette liaison, on a déjà proposé de munir le vitrage latéral d'un profil en métal ou en matière plastique que l'on colle sur le verre du vitrage, et qui est percé de trous pour la fixation du vitrage au mécanisme de montée-baisse.

Ce type de montage, bien que simplifiant les opérations de montage du vitrage dans la carrosserie du véhicule, n'est pas entièrement satisfaisant car il est difficilement robotisable.

On connait d'après le document FR-A-2 477 480 un dispositif d'accouplement entre la glace et un lève-glace de véhicule automobile comprenant au moins une ferrure porte-glace reliée à l'organe de manoeuvre du lève-glace, dans lequel les moyens de fixation de la glace porte une chape munie de moyens d'enclenchement servant à l'enclencher avec la ferrure.

Ce dispositif permet d'éliminer l'opération manuelle de fixation de la glace à la ferrure porte-glace.

Les moyens de fabrication de la glace sont un profilé à section en U dans lequel le bord inférieur de la glace est enfilé avec interposition d'une garniture de retenue. Un inconvénient de ce dispositif est que le montage de la glace dans les moyens de fixation nécessite d'autres opérations manuelles.

L'invention propose un vitrage destiné a être monté de façon mobile dans la carrosserie d'un véhicule et qui est conçu pour pouvoir être installé tel quel automatiquement dans ladite carrosserie, notamment par un système robotisé, ou tout au moins être raccordé automatiquement à la pièce de liaison avec le mécanisme assurant sa mobilité par exemple dans un mouvement de montée-baisse.

Le vitrage selon l'invention comprend un vitrage monolithique ou feuilleté en verre et/ou en matière plastique muni sur au moins une partie de sa périphérie, d'un profil surmoulé, obtenu par encapsulation du vitrage, présentant une structure permettant un assemblage aisé et permanent par emboîtement et/ou pincement avec une pièce de liaison solidaire du mécanisme assurant la mobilité du vitrage.

Le profil surmoulé sur au moins une partie de la périphérie du vitrage peut épouser tout le bord dudit vitrage, à savoir les deux faces périphériques et le chant. Dans une variante, le profil surmoulé peut recouvrir une seule des deux faces du bord du vitrage et son chant (ou pas).

Le profil peut présenter des formes très variables. Il peut présenter une ou plusieurs rainures et/ou renforcements ou saillies droites ou en queue d'aronde, etc... Ces formes doivent néanmoins toujours permettre l'emboîtement et l'assemblage, notamment par pincement dans la pièce de liaison solidaire du mécanisme assurant la mobilité du vitrage, pièce dont la forme est bien entendu adaptée à celle du profil. L'assemblage doit être aisé pour pouvoir être réalisé par un système robotisé. Il doit être permanent afin d'assurer un fonctionnement fiable et durable du vitrage mobile.

Pour fabriquer le profil surmoulé par surmoulage (ou encapsulation) du vitrage, on peut utiliser en tant que matière de surmoulage une matière thermoplastique, par exemple du polyamide, du chlorure de polyvinyle, du polyuréthane, de l'ABS, une matière thermodurcissable, par exemple du polyuréthane, un élastomère tel que l'EPDM, etc... Ces matières de base peuvent être renforcées de fibres de verre, de carbone, etc...

Le profil surmoulé peut être prévu uniquement sur la partie du bord du vitrage destinée à venir s'assembler avec la pièce de liaison.

Dans une variante le profil surmoulé fait partie d'un encadrement périphérique obtenu par encapsulation.

L'invention concerne aussi l'ensemble constitué d'un vitrage monolithique ou feuilleté muni d'un profil surmoulé et d'une pièce de liaison dans les structures respectives permettent un assemblage par un système robotisé.

D'autres caractéristiques et avantages de l'invention apparaitront dans la description suivante d'exemples de réalisations non limitatifs, faite en référence aux figures.

La figure 1 représente un vitrage destiné à être monté mobile dans un mouvement de montée-baisse dans une carrosserie d'une automobile.

La figure 2 représente le vitrage de la figure 1 dans la position montée sur la pièce de liaison solidaire du mécanisme de montéebaisse.

La figure 3 représente une variante d'un ensemble d'un vitrage et de la pièce de liaison.

Les figures 4 et 5 représentent d'autres variantes d'ensembles vitrage-pièce de liaison.

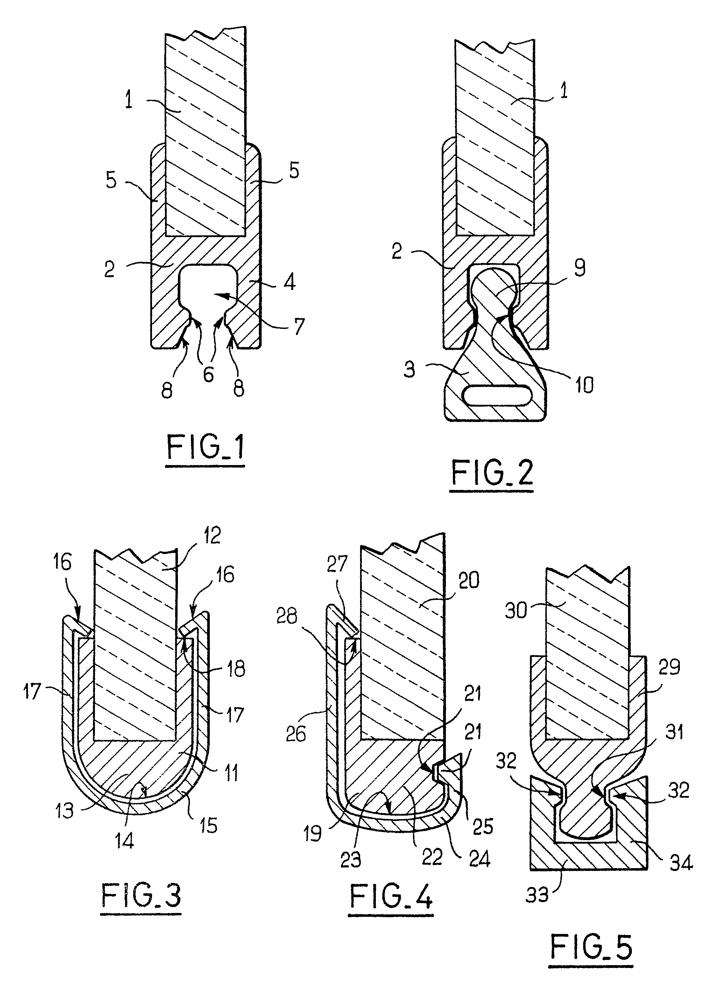

Le vitrage représenté sur la figure 1 comprend une feuille de verre monolithique 1, sur la partie inférieure de la périphérie de laquelle a été placé un profil surmoulé 2, permettant un assemblage automatisé avec une pièce de liaison de forme adaptée. Le profil peut être obtenu par les procédés classiques de surmoulage de vitrage, par exemple comme décrit dans la publication de brevet EP 127 546.

Ce profil peut être éventuellement une partie d'un encadrement périphérique qui peut avoir une forme différente en d'autres parties. Le profil 2 en matière plastique bien que rigide pour pouvoir assurer le fonctionnement du vitrage, possède une déformabilité élastique suffisante pour pouvoir être assemblé avec la pièce de liaison 3 comme représenté sur la figure 2. Le profil 2 présente deux ailes 4 prolongeant vers le bas les parties d'encadrement 5.

Les deux ailes 4 sont munies de nervures internes 6 délimitant un espace d'emboîtement 7 pour la pièce de liaison 3 et un espace d'entrée à pans inclinés 8 pour ladite pièce.

L'assemblage du vitrage muni de son profil 2 et de la pièce de liaison 3 peut s'effectuer simplement à l'aide d'un robot ou d'un autre système automatique car il suffit de placer le vitrage dans l'axe de la pièce 3 et faire subir à au moins un de ces deux composants, une translation pour l'emboîtement.

Comme représenté sur la figure 2, en position assemblée avec la pièce de liaison 3, les nervures 6 assurent le verrouillage de la tête 9 à bout arrondi de la pièce de liaison 3, en venant s'incruster dans les rainures 10 présentées par la partie centrale de la pièce 3.

Comme décrit précédemment, la pièce de liaison qui peut être ici en un matériau rigide, est fixée au mécanisme de montée-baisse (non représenté) par collage par exemple.

La figure 3 représente une variante du vitrage selon l'invention et de la pièce de liaison de forme adaptée. Le profil 11 surmoulé a la forme d'un simple surmoulage d'une partie de la périphérie du vitrage 12. La partie inférieure 13 présente un profil arrondi 14 permettant l'assemblage avec la pièce de liaison 15 présentant une forme générale en U dont les bouts 16 des ailes 17 sont incurvés vers les faces du vitrage pour pouvoir venir se bloquer sur les extrémités 18 de la surépaisseur formée par le profil surmoulé 11. La hauteur de la pièce de liaison est bien entendu calculée en fonction de la hauteur du profil pour pouvoir s'adapter à celui-ci. Cette pièce présente une déformabilité élastique pour permettre le passage du profil entre les bouts 16 des ailes 17 au cours de l'opération d'assemblage. La pièce de liaison peut être fixée sur le mécanisme de montée-baisse par tout moyen adéquat (non représenté).

La figure 4 représente une autre variante du vitrage selon l'invention. Le profil surmoulé 19 n'épouse ici qu'une partie du bord de la feuille de verre 20. Il présente une rainure 21 dans sa partie inférieure 22, d'extrémité 23 arrondie. La pièce de liaison 24 adaptée au profil 19 a la forme générale d'un U dont une aile 25 serait plus courte que l'autre aile 26. Les extrémités incurvées 27 des ailes se bloquent sur la surépaisseur 28 du profil 19 et dans la rainure 21. La pièce de liaison 24 doit présenter une élasticité suffisante pour l'assemblage et le pincement. Cette variante présente notamment l'avantage d'être peu encombrante sur au moins un des côtés du vitrage.

La figure 5 représente une autre variante, dans laquelle le profil surmoulé 29 épousant une partie de la périphérie du vitrage 30 présente deux rainures 31 donnant au profil la forme d'un téton, dans lesquelles viennent se bloquer les extrémités 32 en forme d'appendices orientés vers l'intérieur des deux branches 34 de la pièce de liaison 33 en forme de U.

La pièce de liaison peut être fixée sur le mécanisme de montée-baisse par tout moyen convenable.

De même que dans les variantes précédentes, la rigidité et l'élasticité du profil surmoulé et de la pièce de liaison sont déter minées pour permettre leur association par des systèmes robotisés et obtenir un bon fonctionnement du vitrage mobile.

Le vitrage mobile selon l'invention peut être utilisé par exemple en tant que vitrage latéral coulissant dans une carrosserie de véhicule automobile.

**Revendications**

1. Vitrage mobile comprenant un vitrage monolithique ou feuilleté en verre et/ou en matière plastique muni sur au moins une partie de sa périphérie, d'un profil destiné à être assemblé à une pièce de liaison solidaire du mécanisme assurant la mobilité du vitrage, caractérisé en ce que le profil est un profil surmoulé obtenu par encapsulation du vitrage et qu'il présente une structure permettant un assemblage aisé et permanent par emboîtement et/ou par pincement avec la pièce de liaison.

2. Vitrage selon la revendication 1, caractérisé en ce que le profil surmoulé comporte des rainures et/ou saillies dans lesquelles ou sur lesquelles vient se bloquer la pièce de liaison.

3. Vitrage selon une des revendications 1 à 2, caractérisé en ce que le profil surmoulé fait partie d'un encadrement périphérique surmoulé.

4. Vitrage selon une des revendications 1 à 3, caractérisé en ce que le profil surmoulé présente deux ailes munies de nervures internes délimitant un espace d'emboîtement pour la pièce de liaison et un espace d'entrée à pans inclinés.

5. Vitrage selon une des revendications 1 à 3, caractérisé en ce que le profil surmoulé n'épouse qu'une partie du bord du vitrage.

6. Vitrage selon la revendication 5, caractérisé en ce que le profil surmoulé présente une rainure (21) dans sa partie inférieure permettant le blocage de la pièce de liaison.

7. Vitrage selon une des revendications 1 à 3, caractérisé en ce que le profil surmoulé présente la forme d'un téton.

8. Ensemble constitué d'un vitrage monolithique ou feuilleté muni d'un profil surmoulé selon une des revendications 1 à 7 et d'une pièce de liaison, caractérisé en ce que le profil surmoulé et la pièce de liaison présentent des structures permettant leur assemblage par un système robotisé.

FIG_1

FIG_2

FIG_3

FIG_4

FIG_5

Office européen
des brevets

# RAPPORT DE RECHERCHE EUROPEENNE

Numero de la demande

EP 88 40 1096

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | FR-A-2 477 480 (T. SESSA)<br>* Figures 2,3; page 2, lignes 6-33 *<br>--- | 1-5,8 | E 05 F 11/38<br>B 60 J 1/17 |
| Y | FR-A-2 575 976 (AUTOMOBILES PEUGEOT-CITROEN)<br>* Figures 1-4, page 2, ligne 10 - page 3, ligne 31 *<br>--- | 1-5,8 | |
| A | FR-A-2 128 959 (L. MILLY)<br>* Figures 4,6; revendication 1 *<br>--- | 6 | |
| A,D | EP-A-0 127 546 (SAINT-GOBAIN VITRAGE)<br>--- | | |
| A | DE-A-2 836 038 (GOFRA ENTWICKLUNGS- UND FERTIGUNGSTECHNIK GmbH)<br>----- | | |

DOMAINES TECHNIQUES RECHERCHES (Int. Cl.4)

E 05 F
B 60 R
B 60 J

Le présent rapport a été établi pour toutes les revendications

| Lieu de la recherche | Date d'achèvement de la recherche | Examinateur |
|---|---|---|
| LA HAYE | 20-07-1988 | SCHEIBLING C.D.A. |

EPO FORM 1503 03.82 (P0402)